(19) **Europäisches Patentamt / European Patent Office / Office européen des brevets**

(11) **EP 1 791 362 A2**

(12) **EUROPEAN PATENT APPLICATION**

(43) Date of publication:
 **30.05.2007 Bulletin 2007/22**

(51) Int Cl.:
 ***H04N 7/173*** *(2006.01)*

(21) Application number: **06024737.6**

(22) Date of filing: **29.11.2006**

(84) Designated Contracting States:
 **AT BE BG CH CY CZ DE DK EE ES FI FR GB GR HU IE IS IT LI LT LU LV MC NL PL PT RO SE SI SK TR**
 Designated Extension States:
 **AL BA HR MK YU**

(30) Priority: **29.11.2005 KR 20050115154**
 **16.08.2006 KR 20060077363**

(71) Applicant: **Samsung Electronics Co., Ltd.**
 **Suwon-si, Gyeonggi-Do (KR)**

(72) Inventors:
 • **Song, Jae-Yeon**
 **Yeongtong-gu**
 **Suwon-si**
 **Gyeonggi-do (KR)**
 • **Lee, Kook-Heul**
 **Yeongtong-gu**
 **Suwon-si**
 **Gyeonggi-do (KR)**
 • **Lee, Hye-Young**
 **Yeongtong-gu**
 **Suwon-si**
 **Gyeonggi-do (KR)**

(74) Representative: **Grünecker, Kinkeldey,**
 **Stockmair & Schwanhäusser**
 **Anwaltssozietät**
 **Maximilianstrasse 58**
 **80538 München (DE)**

(54) **Method and apparatus for handling an electronic service guide transmission error in a digital video broadcasting system**

(57) A method and apparatus for handling an Electronic Service Guide (ESG) transmission error in a digital video broadcasting system, including a Service Application (SA) entity for receiving a file repair request message from a terminal after broadcasting an ESG from a Service Management (SM) entity to the terminal and, when the file repair request message is a request for the ESG, providing the SM entity with the file repair request message and an address of the terminal; a logical ESG aggregator for generating the ESG within the SM entity interpreting the request message and determining whether to retransmit the ESG to the terminal, and when determining to retransmit the ESG, the logical ESG aggregator delivering, ESG metadata and the address of the terminal to an interactive server for transmitting the ESG within the SM entity. The interactive server transmits the ESG metadata to the terminal.

FIG.1

EP 1 791 362 A2

## EP 1 791 362 A2

**Description**

## BACKGROUND OF THE INVENTION

1. Field of the Invention

The present invention generally relates to an Electronic Service Guide (ESG) in a digital video broadcasting system, and more particularly to a method and apparatus that can handle a transmission error using a file repair request command when an ESG transmission error occurs.

2. Description of the Related Art

Digital Video Broadcasting (DVB) is a transmission standard for supporting digital multimedia services for handheld and mobile terminals as well as existing digital broadcasting with European digital broadcasting technologies.

A DVB system can multiplex Moving Picture Experts Group-2 (MPEG2) Transport Stream (TS)-based broadcasting data and can simultaneously transmit Internet Protocol (IP)-based data streams. Further, the DVB system can multiplex and transmit various services in one IP stream. After receiving data of the transmitted IP stream, a terminal demultiplexes the received data into individual services, decodes a TS of a desired service, and provides a user with the decoded TS through a display screen. At this time, the user requires information about various services and service content provided from the DVB system.

The DVB system uses an Electronic Service Guide (ESG) to provide notification of service information. ESG data includes time information for a particular service, associated content information, information required to receive content, information required to purchase content, and so on. The DVB system constructs a data model for efficiently transmitting the ESG data and sets data to be transmitted on the basis of the data model.

The ESG is transmitted to a terminal using an IP stream at a time different from that of an actual data stream. Thus, a service provider can transmit information to using the ESG before the user receives a corresponding service. Because the ESG can be used for various purposes as well as a guide for programs, EGS information is very important in a mobile broadcasting environment.

When the ESG is transmitted to the terminal, it is recognized as a general file and is transmitted using the same protocol as a file transfer protocol. Conventionally, in the mobile broadcasting, the file transfer protocol conforms to the Internet Engineering Task Force (IETF) Request for Comments (RFC) 3926 File Delivery over Unidirectional Transport (FLUTE) standard. If a transmission error occurs when the terminal receives the ESQ an ESG repair request can be sent to a network using a file repair request command as in the case of the general file. However, there is a problem in that a method and apparatus for handling a transmission error on a network are not provided. Thus, a need exists for a method and apparatus capable of sending a repair request to a network and receiving a retransmitted ESG when an ESG transmission error occurs.

## SUMMARY OF THE INVENTION

Accordingly, the present invention has been designed to solve the above and other problems occurring in the prior art. The present invention provides a method and apparatus that can receive a retransmitted Electronic Service Guide (ESG) using a general file repair request command when a terminal receives an ESG in which a transmission error has occurred in a digital video broadcasting system for providing the ESG.

In accordance with an aspect of the present invention, there is provided a method for handling an Electronic Service Guide (ESG) transmission error in a digital video broadcasting system, the method including receiving, by a service application entity, a file repair request message from a terminal after broadcasting an ESG from a service management entity to the terminal; transmitting the file repair request message and an address of the terminal from which the file repair request message has been sent from the service application entity to the service management entity when the file repair request message includes a request for the ESG; interpreting the file repair request message in a logical ESG aggregator for generating the ESG within the service management entity and determining whether to retransmit the ESG to the terminal which transmitted the file repair request message delivering ESG metadata and the address of the terminal from the logical ESG aggregator to an interactive server for transmitting the ESG within the service management entity, when determining to retransmit the ESG; and transmitting the ESG metadata from the interactive server to the terminal.

In accordance with another aspect of the present invention, there is provided a method for handling an Electronic Service Guide (ESG) transmission error in a digital video broadcasting system, the method including receiving, by a service application entity, a file repair request message from a terminal after broadcasting an ESG from a service management entity to the terminal; transmitting the file repair request message and an address of the terminal from which the file repair request message has been sent from the service application entity to the service management entity when the file repair request message includes a request for the ESG; interpreting the request message in a logical ESG aggregator for generating the ESG within the service management entity and determining whether to retransmit the ESG to the terminal which transmitted the file repair request message; delivering ESG metadata and the address of the terminal from the logical ESG aggregator to the service application entity when determining to retransmit the ESG; and transmitting the ESG metadata from the service application entity to the terminal.

In accordance with another aspect of the present invention, there is provided a method for handling an Electronic Service Guide (ESG) transmission error in a digital video broadcasting system, the method including receiving, by a service management entity, a file repair request message from a terminal after broadcasting an ESG from the service management entity to the terminal; determining whether to retransmit the ESG in an interactive server for transmitting the ESG from the service management entity using an ESG repair request message; transmitting an ESG retransmission request message from the interactive server to a logical ESG aggregator for generating the ESG within the service management entity when determining to retransmit the ESG; transmitting ESG metadata and an address of the terminal from the logical ESG aggregator to the interactive server; and transmitting the ESG metadata from the interactive server to the terminal.

In accordance with another aspect of the present invention, there is provided an apparatus for handling an Electronic Service Guide (ESG) transmission error in a digital video broadcasting system, the apparatus including a service application entity for receiving a file repair request message from a terminal and determining whether to retransmit an ESG; and a service management entity for generating the ESG, broadcasting the generated ESG to the terminal, receiving the file repair request message from the service application entity, determining whether to retransmit the ESG, and transmitting ESG metadata to the terminal on a basis of the result of the determination, wherein the service application entity provides the service management entity with the file repair request message and an address of the terminal which transmitted the file repair request message when the file repair request message includes a request for the ESG, and the service management entity interprets the file repair request message, determines whether to retransmit the ESG to the terminal which transmitted the file repair request message, and transmits the ESG metadata to the terminal on the basis of the results of the determination.

In accordance with another aspect of the present invention, there is provided an apparatus for handling an Electronic Service Guide (ESG) transmission error in a digital video broadcasting system, the apparatus including a service application entity for receiving a file repair request message from a terminal and determining whether to retransmit an ESG; and a service management entity for generating the ESG, broadcasting the generated ESG to the terminal, receiving the request message from the service application entity, determining whether to retransmit the ESG, and transmitting ESG metadata to the terminal via the service application entity on a basis of a determination result, wherein the service application entity provides the service management entity with the file repair request message and an address of the terminal which transmitted the file repair request message when the file repair request message includes a request for the ESG, and the service management entity interprets the request message and determines whether to retransmit the ESG to the terminal which transmitted the file repair request message has been sent.

In accordance with yet another aspect of the present invention, there is provided an apparatus for handling an Electronic Service Guide (ESG) transmission error in a digital video broadcasting system, the apparatus including an interactive server for broadcasting an ESG to a terminal, receiving an ESG repair request message from the terminal, interpreting the file repair request message, and determining whether to retransmit the ESG to the terminal which transmitted the file repair request message and a logical ESG aggregator for generating the ESG, receiving an ESG retransmission request on a basis of the results of the determination and transmitting ESG metadata to the interactive server, the interactive server transmitting the ESG metadata received from the logical ESG aggregator to the terminal.

## BRIEF DESCRIPTION OF THE DRAWINGS

The above and other features and advantages of the present invention will be more clearly understood from the following detailed description taken in conjunction with the accompanying drawings, in which:

FIG. 1 is a block diagram illustrating a structure of a mobile broadcast-related network to which the present invention is applied;
FIG. 2 is a block diagram illustrating a structure of an Electronic Service Guide (ESG)-related network to which the present invention is applied;
FIG 3 is a block diagram illustrating a file-related network structure to which the present invention is applied;
FIG. 4 is a flow chart illustrating a message flow of a file-related network in accordance with the present invention;
FIG. 5 is a block diagram illustrating a message flow of a file-related network in accordance with the present invention;
FIG. 6 is a flow chart illustrating a message flow of a file-related network in accordance with the present invention;
FIG. 7 is a flow chart illustrating a message flow of a transmitter in accordance with the present invention;

FIG. 8 is a flow chart illustrating a message flow of a receiver in accordance with the present invention;

FIG. 9 is a flow chart illustrating a message flow of a transmitter in accordance with the present invention;

FIG. 10 is a flow chart illustrating a message flow of a receiver in accordance with the present invention;

FIG. 11 is a flow chart illustrating a message flow of a transmitter in accordance with the third exemplary embodiment of the present invention;

FIG. 12 is a flow chart illustrating a message flow of a receiver in accordance with of the present invention;

FIG. 13 is a block diagram illustrating a structure of a transmitter in accordance with of the present invention; and

FIG. 14 is a block diagram illustrating a structure of a receiver in accordance with the present invention.

## DETAILED DESCRIPTION OF THE EXEMPLARY EMBODIMENTS

Operational principles of the present invention will be described in detail herein below with reference to the accompanying drawings. In the following description, detailed descriptions of functions and configurations incorporated herein that are well known to those skilled in the art are omitted for clarity and conciseness. It is to be understood that the phraseology and terminology employed herein are for the purpose of description and should not be regarded as limiting the present invention.

According to the present invention, an Electronic Service Guide (ESG) repair request is sent (i.e., transmitted) to a network using a file repair request command as in the case of a general file if a transmission error occurs when a terminal receives an ESG. Herein, an embodiment in which a repair request is sent to a network and a retransmitted ESG is received and an embodiment in which a unique repair request for an ESG is sent to a network and a retransmitted ESG is received, when an ESG transmission error occurs will be described in detail.

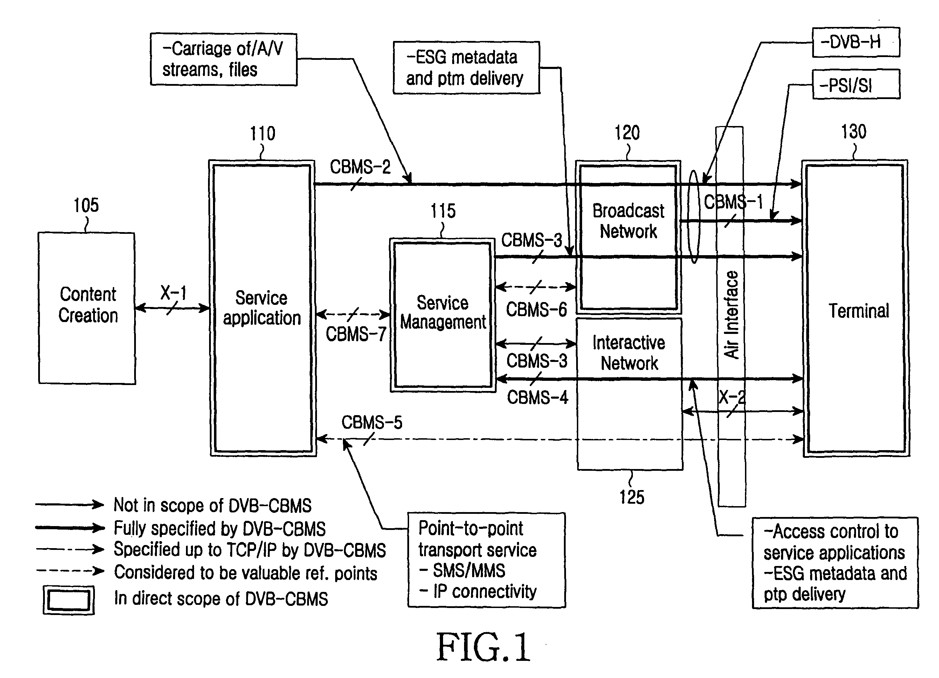

FIG. 1 is a block diagram a structure of a mobile broadcast-related network to which the present invention is applied.

Logical entities are illustrated as blocks and are distinguished according to their main functions. The blocks may be physically separated or provided in the same server. Referring to FIG. 1, a Content Creation (CC) entity 105 creates content sources and then delivers the created content sources to a Service Application (SA) entity 110. The SA entity 110 generates a specific service using the content sources received from the CC entity 105 and additional metadata required for service configuration. A Service Management (SM) entity 115 performs functions of service configuration, resource allocation, ESG provisioning, security, and so on.

A broadcast network 120 is a Digital Video Broadcasting-Handheld (DVB-H) network and includes a section for broadcasting an ESG and broadcast-related signaling adapted to the DVB-H network. present invention will be described with reference to DVB-H. However, the present invention is not limited to the DVB-H. In general, an interactive network 125 is a cellular network. The interactive network 125 can be every network with a function capable of transmitting data or a request message from a terminal to a network. A terminal 130 is a user terminal for receiving a service.

In FIG. 1, interfaces between the entities as well as the above-described logical entities are defined. In general, X-1, X-2 and X-3 interfaces are not defined in an interactive or two-way standard based on the DVB-H. Broadcast-related signaling is transmitted via a Convergence of Broadcast and Mobile Services (CBMS)-1 interface. Content elements of audio, video, files, and so on are transmitted via a CBMS-2 interface. An ESG is transmitted via a CBMS-3 interface. In point-to-point transmission, the ESG is transmitted via a CBMS-4 interface. In point-to-point transmission, a Short Message Service (SMS) and Multimedia Message Service (MMS) are transmitted via a CBMS-5 interface. For DVB-H transmission, configuration parameters of the number of services, an allocated bandwidth, and so on are transmitted via a CBMS-6 interface. A service application is declared or metadata is transmitted via a CBMS-7 interface. Only the main functions of the interfaces have been described. The interface functions are not limited to the above description.

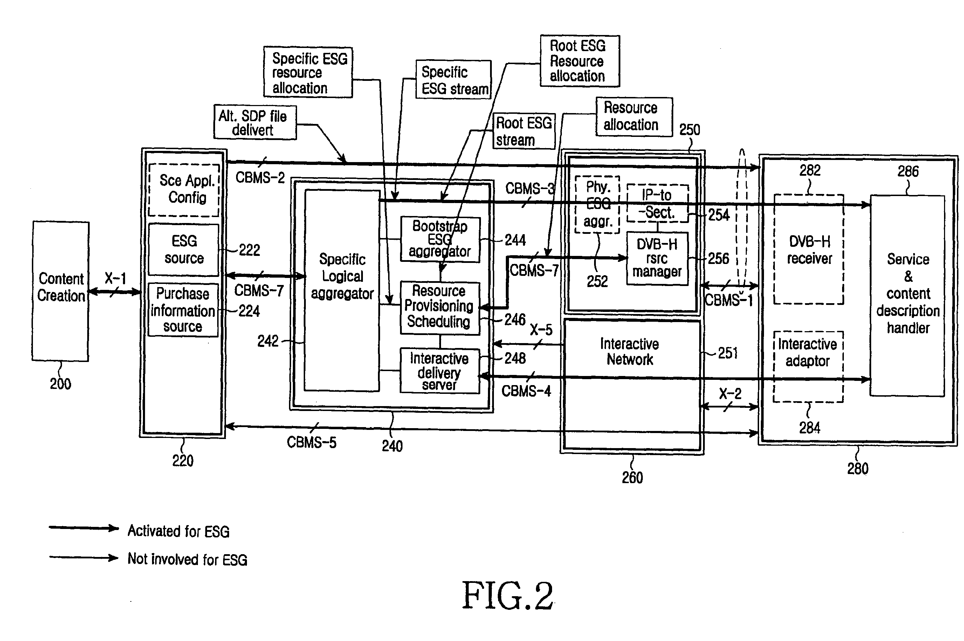

FIG 2 is a block diagram illustrating a structure of an ESG-related network to which the present invention is applied.

FIG. 2 illustrates the architecture and logical functional blocks of entities for generating and transmitting an ESG on the basis of the basic architecture of FIG 1. Functional blocks of an ESG source 222 and a purchase information source 224 are provided in an SA entity 220. The ESG source 222 collects data corresponding to an ESG source and includes information received from a CC entity 200 and other metadata. The purchase information source 224 is a block including purchase information. The information is provided to an SM entity 240 via the CBMS-7 interface.

The SM entity 240 is includes four functional blocks (i.e., blocks 42, 244, 246, and 248 which will be described below). A specific logical ESG aggregator 242 generates a single ESG by aggregating ESG sources delivered from the specific logical ESG aggregator 242. A bootstrap ESG aggregator 244 manages information required for bootstrapping the ESG. A resource provisioning scheduler 246 performs functions of network resource management and provisioning, and scheduling management. An interactive delivery server 248 is responsible for point-to-point ESG transport. Network block 260 includes a broadcast network block 250 and an interactive network block 251. The broadcast network block 250 includes a physical ESG aggregator 252, an Internet Protocol (IP)-to-section mapper 254, and a DVB-H resource mapper 256 which are responsible for adapting the delivered ESG to a DVB-H network.

A terminal block 280 includes a DVB-H receiver 282 for receiving a DVB-H signal of a terminal 280, an interactive adaptor 284 related to interactive or two-way transport, and a service & content description handler 286 for receiving, decoding and displaying the ESG.

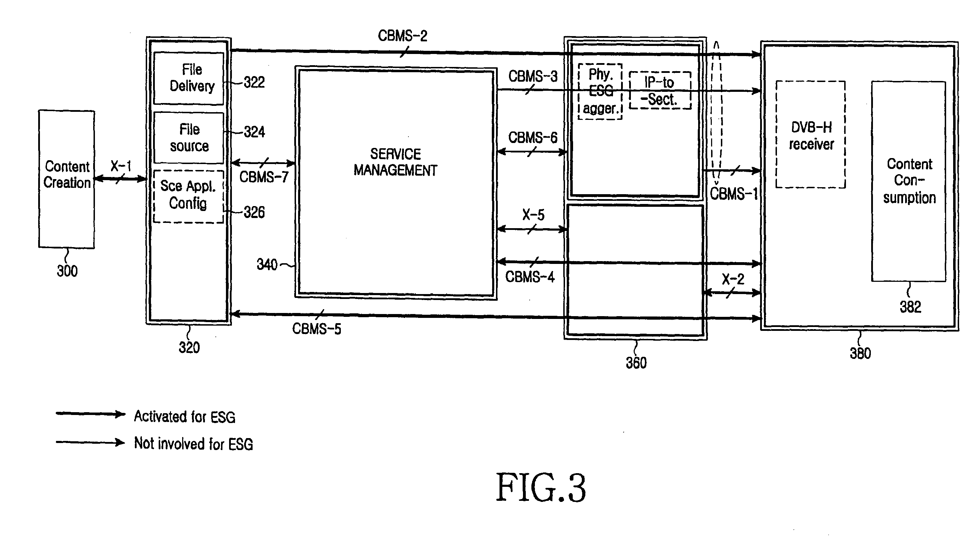

FIG. 3 is a block diagram illustrating a file-related network structure to which the present invention is applied.

FIG 3 illustrates the architecture and logical functional blocks of entities for generating and transmitting a file on the basis of the basic architecture of FIG 1. An SA entity 320 includes a file delivery sub-entity 322 for delivering a file, a file source sub-entity 324 for receiving a file source from a CC entity, and a service application configuration sub-entity 326 responsible for service configuration. A terminal 380 includes a content consumption sub-entity 382 and is responsible for providing a service related to the received files. Because other blocks of FIG. 3 are the same as those of FIG. 2, for the sake of clarity a description thereof has been omitted.

When a file transmission error is determined to have occurred, the terminal sends a Hyper Text Transfer Protocol (HTTP) file repair request message to the SA entity 320. The HTTP file repair request message includes information about a position of a file to be received using HTTP and a part in which the transmission error has occurred. An example of the HTTP file repair request message is as follows.

$$\text{"GET www.example.com/news/latest.3gp?ipdc-flute-}$$
$$\text{repair \& SBM=5; ESI=12+SBN=20;ESI=27 HTTP/1.1"}$$

The above example conforms to "query=application*("&"[sbn_info])" defined in a standard document of DVB-CBMS Content Delivery Protocol (CDP) (tm-cbms1167). In the above example, an application is 'ipdc-flute-repair' and sbn_info indicates a block to be received within a file and indicates a Forward Error Correction (FEC) encoding identifier (ID). The above example indicates a packet in which Source Block Number (SBN) = 5 and Encoding Symbol ID (ESI) = 12 and a packet in which SBN = 20 and ESI = 27.

When a delivered file is an ESG, an entity responsible for point-to-point ESG transport becomes an SM (service management) entity 340. Thus, communication between the SA entity 320 and the SM entity 340 is required. The SM entity 340 interprets a file repair request message and should notify the interactive delivery server 248 of information about a terminal for receiving ESG data and a point-to-point ESG.

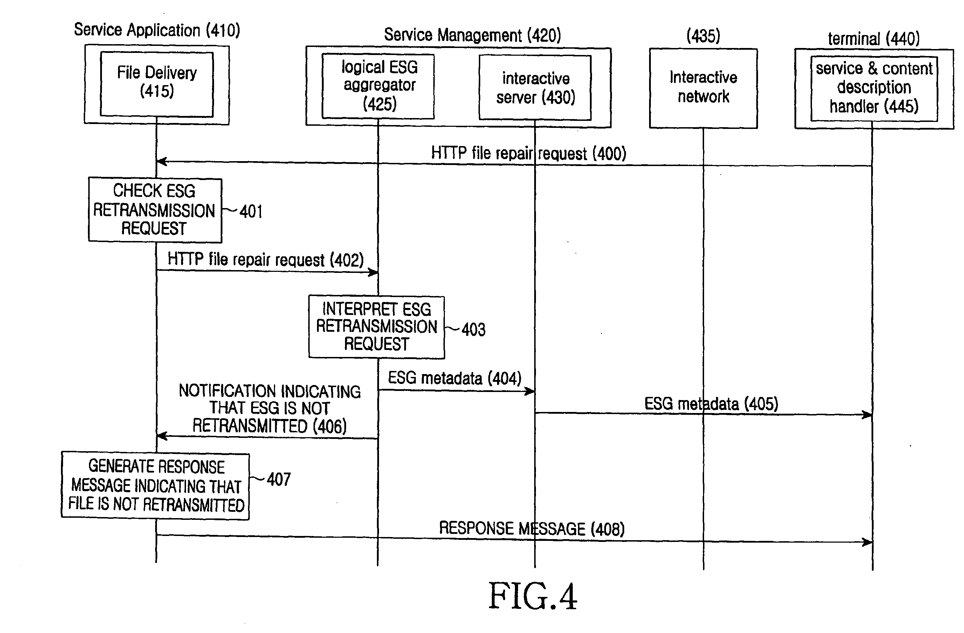

FIG. 4 is a flow diagram illustrating a message flow of a file-related network in accordance with the present invention.

Referring to FIG. 4, when receiving an ESG in which a transmission error has occurred, a terminal 440 provides an SA entity 410 with a general file repair request message using file retransmission request command signaling without determining whether an erroneous file is the ESG or a general file in step 400. The SA (Service Application) entity 410 detects a position of a requested retransmission file and determines whether the requested file is the general file or the ESG in step 401. For this, the SA entity 410 preferably stores information about whether an application file is the ESG or the general file.

If the requested retransmission file is the ESG, the file repair request message is retransmitted to an SM entity 420 responsible for the ESG in step 402. At this time, an address of the terminal from which the message has been sent is provided. A logical ESG aggregator 425 of the SM entity 420 interprets the message and determines that the message is an ESG request message in step 403. Along with the address of the terminal, ESG metadata is delivered to an interactive server 430 in step 404. For this, the logical ESG aggregator 425 should be able to interpret the file repair request message using the HTTP.

Using the ESG metadata and the terminal address delivered from the interactive server 430, the ESG is sent to the associated terminal 440 in step 405. If the logical ESG aggregator 425 determines not to retransmit the ESG, it notifies the SA entity 410 that the ESG is not retransmitted in step 406. The SA entity 410 generates a file repair response message indicating that the ESG is not retransmitted in step 407 and then sends (i.e., transmits) the generated file repair response message to the terminal 440 in step 408.

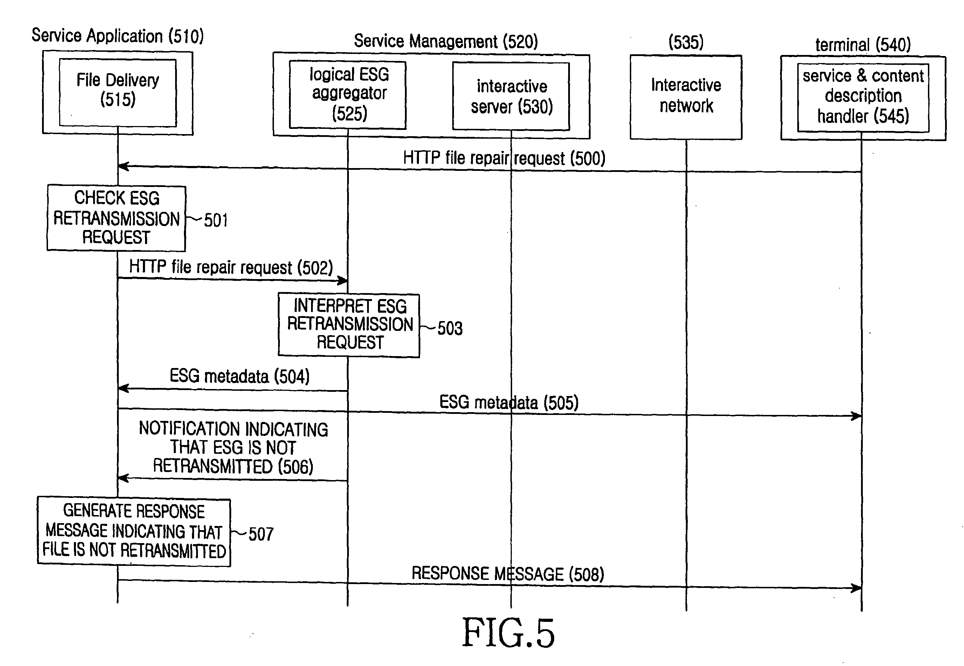

FIG. 5 is a flow diagram illustrating a message flow of a file-related network in accordance with the present invention.

Referring to FIG. 5, when receiving an ESG in which a transmission error has occurred, a terminal 540 provides an SA entity 510 with a general file repair request message using file retransmission request command signaling without determining whether an erroneous file is the ESG or a general file in step 500. The SA entity 510 detects a position of a requested retransmission file and determines whether the requested file is the general file or the ESG in step 501. For this, the SA entity 510 should store information about whether an application file is the ESG or the general file.

If the requested retransmission file is the ESG, the file repair request message is retransmitted to an SM entity 520 responsible for the ESG in step 502. At this time, an address of the terminal from which the message has been sent is provided. A logical ESG aggregator 525 of the SM entity 520 interprets the message and determines that the message is an ESG request message in step 503.

Steps 500-503 are similar to steps 400-403 of FIG. 4. In step 504, the SM entity 520 sends ESG metadata to the SA entity 510 in response to the ESG retransmission request. Then, the SA entity 510 sends the ESG metadata to the terminal 540 requesting it in step 505. This is processed as in the case of a general file repair response.

When determining not to retransmit the ESQ the logical ESG aggregator 525 notifies the SA entity 510 that the ESG is not retransmitted in step 506. The SA entity 510 generates a file repair response message indicating that the ESG is not retransmitted in step 507 and then sends the generated file repair response message to the terminal 540 in step 508.

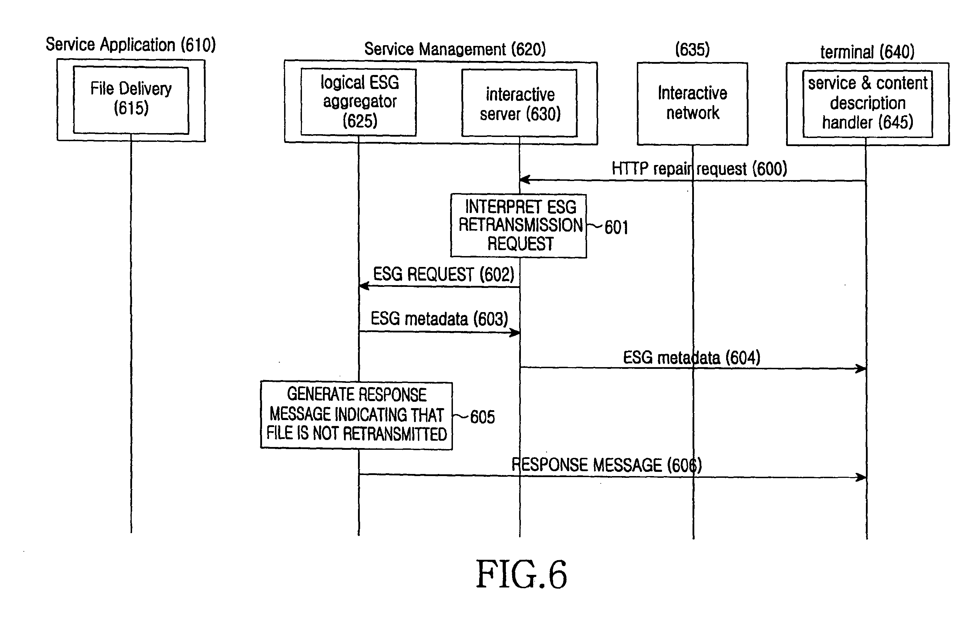

FIG. 6 is a flow diagram illustrating a message flow of a file-related network in accordance with the present invention.

As shown in FIG. 6, when an ESG transmission error occurs a terminal 640 sends a unique request message for an ESG to an SM entity 620 after detecting the ESG transmission error distinguished from a general file transmission error.

Referring to FIG. 6, when the terminal 640 sends an ESG repair request message to an interactive server 630 of the SM entity 620 in step 600, the interactive server 630 interprets the repair request message in step 601, delivers the interpreted message to a logical ESG aggregator 625 in step 602, and receives ESG metadata from the logical ESG aggregator 625 in step 603.

In step 604, the interactive server 630 transmits the received ESG metadata to the terminal 640 requesting it. However, when determining not to retransmit an ESQ the logical ESG aggregator 625 generates a response message indicating that the ESG is not retransmitted in step 605 and sends the response message to the associated terminal 640 in step 606.

On the other hand, the unique request message for the ESG can be modified.

A basic HTTP GET command is as follows.

$$\text{GET Request\_URI} = \text{GET} \quad \text{"*"} | \text{ absolute\_URI } | \text{ abs\_path}$$

"absolute_URI" can have both a Uniform Resource Locator (URL) format and a Universal Resource Name (URN) format. This exemplary embodiment defines an ESG transmission unit in which Container ID = 1 using "urn:dvb: esg:cid:1" corresponding to the URN format, defined by DVB, different from the file repair query formats of the embodiments shown in FIGs. 4 and 5.

Further, the following query is defined using a query attribute having an HTTP GET command.

$$\text{Query} = \text{application*("\&"[TOI\_info])}$$

$$\text{TOI\_info} = \text{"TOI"} = \text{TOI\_number}$$

$$\text{TOI\_number} = 1\text{*DIGIT}$$

The query is constructed with an associated application name and "TOI_info" required for processing the HTTP GET command. "TOI_ info" is a parameter for indicating "TOI_number". "TOI _number" has an integer value as a Transport Object Identifier (TOI) value used upon transmission of a file object in File Delivery over Unidirectional Transport (FLUTE). When an ESG is transmitted in DVB-CBMS, a version value of an ESG container corresponding to a transmission unit in which an associated TOI value is assigned is transmitted. The reason why the TOI value is transmitted is that an associated ESG container may be updated in a process for detecting an ESG transmission error and retransmitting an ESG and the updated ESG container may not be received. When a problem occurs in the overall network, the updated ESG cannot be received.

The following example is possible.

## GET urn:dvb:esg:cid:1?ipdc-esg-repair & TOI=16 HTTP/1.

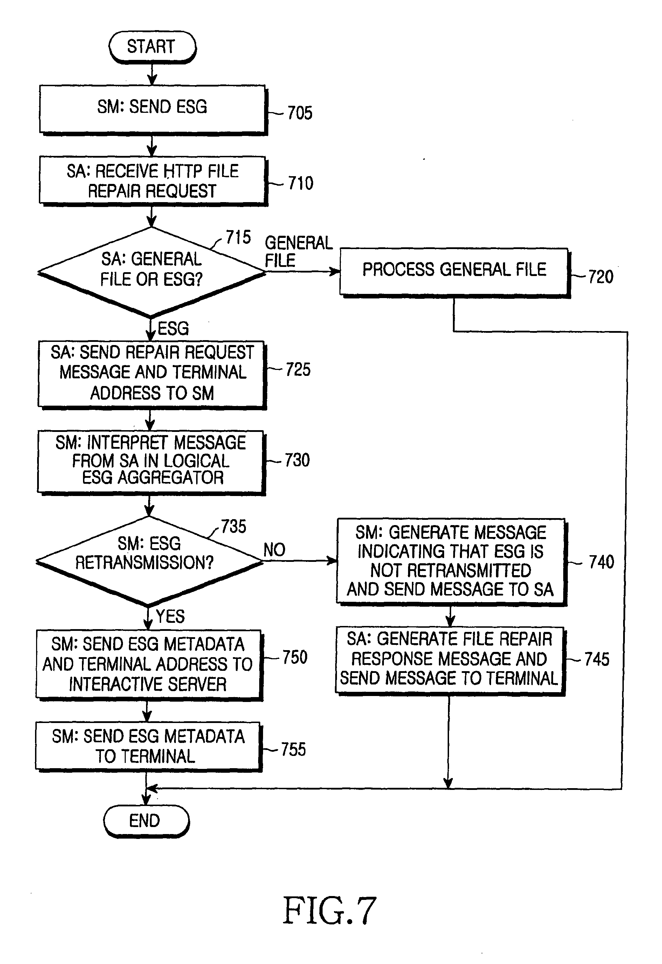

FIG. 7 is a flow chart illustrating a message flow of a transmitter in accordance with the present invention.

In the flowchart of FIG. 7, "SA" stands for a service application entity and "SM" stands for a service management entity. In step 705, the SM entity broadcasts an ESG. When receiving a file repair request message in step 710, the SA entity reads an address of a file from the request message and determines whether the file is a general file or an ESG in step 715. In the case of the general file, the SA entity proceeds to step 720 to perform the same process as that for the general file. However, in the case of the ESG, the SA entity proceeds to step 725 to provide the SM entity with the request message and an address of a terminal which transmitted the message.

In step 730, a logical ESG aggregator of the SM entity receives the request message and the terminal address information from the SA entity, interprets the request message and determines that the message is a retransmission request for a specific ESG In step 735, the SM entity determines whether to retransmit the ESG When determining not to retransmit the ESG, the SM entity proceeds to step 740 and generates a response message indicating that the ESG is not retransmitted and transmits the response message to the SA entity. Then, in step 745, the SA entity generates a response message indicating that file recovery is not available and transmits the response message to the associated terminal. However, when determining to retransmit the ESG in step 735, the logical ESG aggregator of the SM entity provides an interactive server with ESG metadata and a terminal address in step 750. The interactive server of the SM entity transmits the ESG metadata to the terminal in step 755.

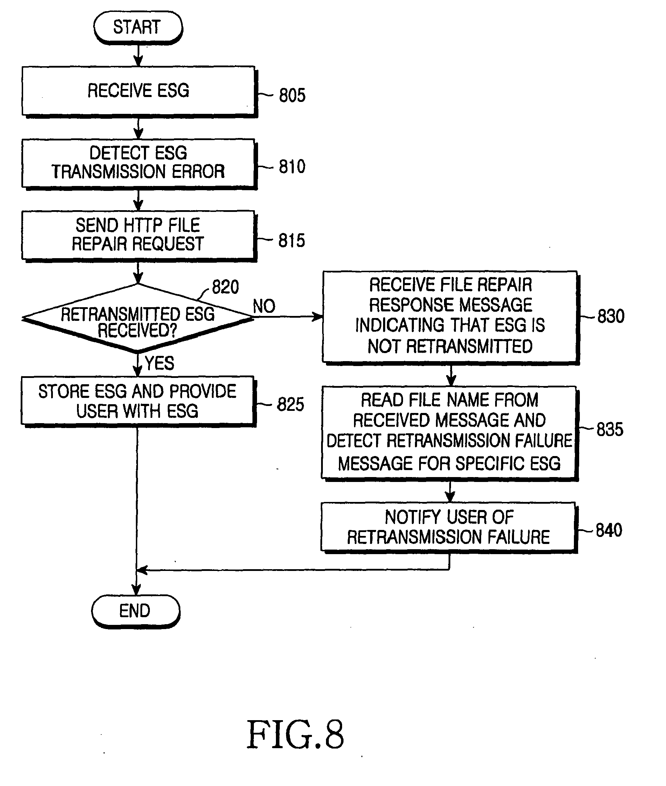

FIG 8 is a flowchart illustrating a message flow of a receiver in accordance with the of the present invention.

Referring to FIG. 8, a terminal receives an ESG in step 805, detects a transmission error in the ESG in step 810, and generates an HTTP file repair request message to transmit the message to a network in step 815.

If the terminal receives a retransmitted file and determines that an address of a file sender is mapped to an interactive server and the retransmitted file is an ESG in step 820, it proceeds to step 825 to store the ESG. However, if the retransmitted file is not the ESG, the terminal proceeds to step 830 to detect a file repair response message indicating that the ESG is not retransmitted. In step 835, the terminal reads a file name from a received message and compares it with an address list on a network of the ESG provided in the terminal. If the received message is determined to be a retransmission failure message for a specific ESG, the terminal notifies a user of the retransmission failure in step 840.

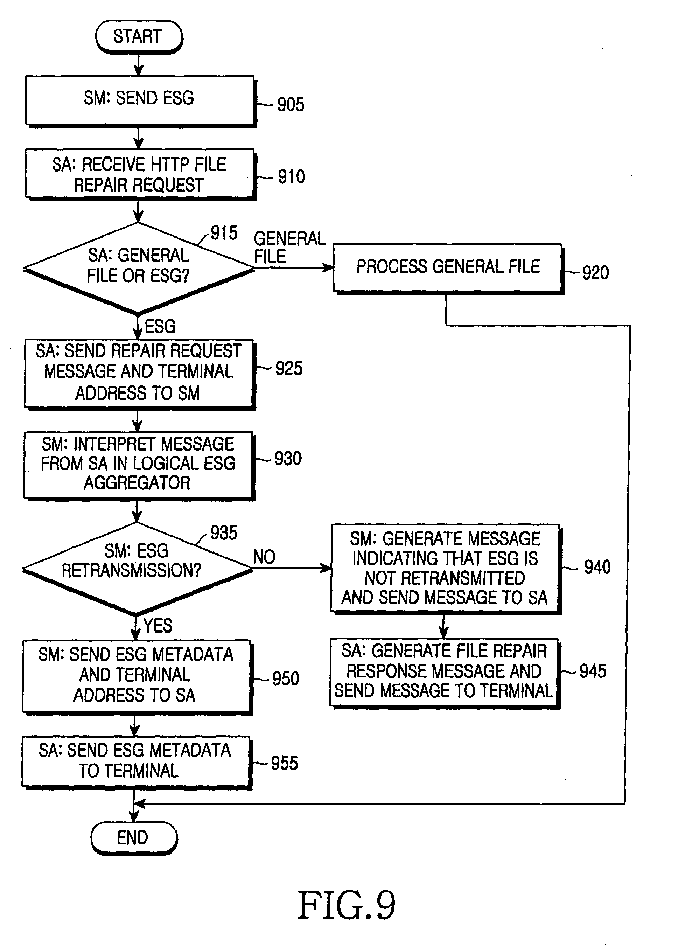

FIG. 9 is a flow chart illustrating a message flow of a transmitter in accordance with the present invention.

In the flowchart of FIG. 9, "SA" stands for a service application entity and "SM" stands for a service management entity. In step 905, the SM entity broadcasts an ESG. When receiving a file repair request message in step 910, the SA entity reads an address of a file from the request message and determines whether the file is a general file or an ESG in step 915. In the case of the general file, the SA entity proceeds to step 920 to perform the same process as that for the general file. However, in the case of the ESG, the SA entity proceeds to step 925 to provide the SM entity with the request message and an address of a terminal from which the message has been sent.

In step 930, a logical ESG aggregator of the SM entity receives the request message and the terminal address information from the SA entity, interprets the request message and determines that the message is a retransmission request for a specific ESG. In step 935, the SM entity determines whether to retransmit the ESG. When determining not to retransmit the ESG, the SM entity proceeds to step 940 to generate a response message indicating that the ESG is not retransmitted and transmit the response message to the SA entity. In step 945, the SA entity generates a response message indicating that file recovery is not available and transmits the response message to the associated terminal. However, when determining to retransmit the ESG in step 935, the logical ESG aggregator of the SM entity provides the SA entity with ESG metadata and a terminal address in step 950. The SA entity receives the ESG metadata and then transmits the received ESG metadata to the terminal in the same way that a general file is transmitted in step 955.

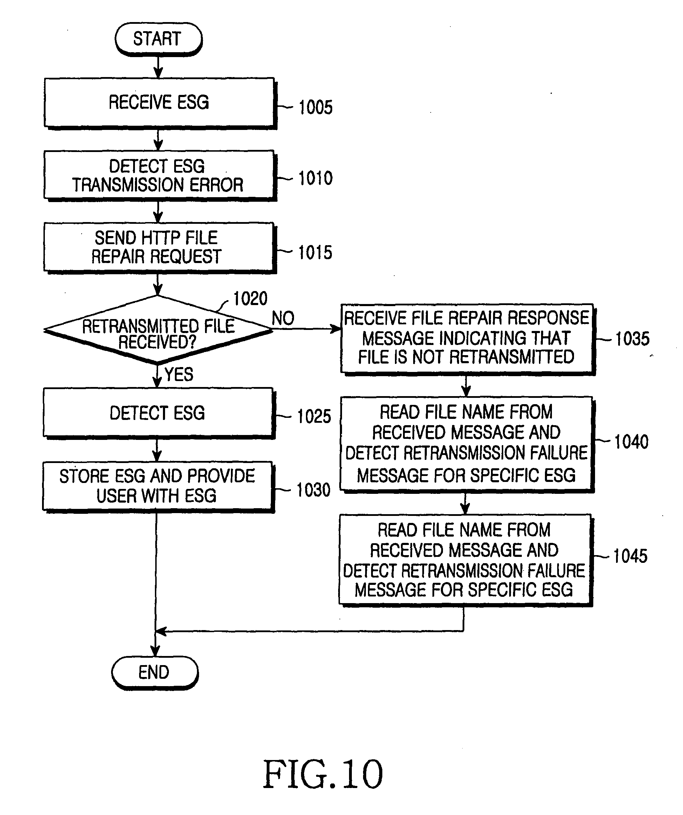

FIG. 10 is a flow chart illustrating a message flow of a receiver in accordance with the present invention.

Referring to FIG. 10, a terminal receives an ESG in step 1005, detects a transmission error in the ESG in step 1010, and generates an HTTP file repair request message to transmit the message to a network in step 1015.

Then, when a retransmitted file is received in step 1020, the terminal proceeds to step 1025 to determine that the retransmitted file is an ESG. In step 1030, the terminal stores the ESG and provides a user with the ESG.

However, if the retransmitted file is not an ESG, the terminal proceeds to step 1035 to detect a file repair request message indicating that the file is not retransmitted. In step 1040, the terminal reads a file name from a received message and compares it with an address list on a network of the ESG provided in the terminal. If the received message is determined to be a retransmission failure message for a specific ESG, the terminal notifies the user of the retransmission failure in step 1045.

The flowchart of the receiver in accordance with the second exemplary embodiment is generally equal to that in accordance with the first exemplary embodiment. A difference between the first and second exemplary embodiment is as follows. In the first exemplary embodiment, a terminal can detect an ESG transmission by checking a server address because an ESG is retransmitted from an interactive server. In the second exemplary embodiment, a terminal can detect an ESG by comparing a name and address of a received file on a network with its own ESG list because the ESG is transmitted via a transmission path of a general file.

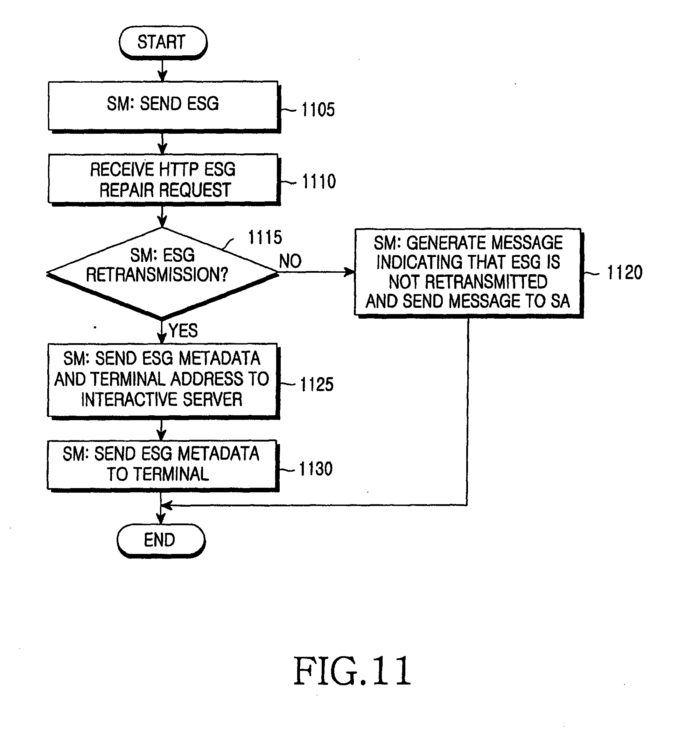

FIG. 11 is a flow chart illustrating a message flow of a transmitter in accordance with the present invention.

Referring to FIG. 11, an SM entity transmits an ESG in step 1105, receives an HTTP ESG repair request message from a specific terminal in step 1110, and determines whether to retransmit the ESG in step 1115.

When determining not to retransmit the ESG, the SM entity proceeds to step 1120 to transmit an ESG repair response message indicating that the ESG is not retransmitted. However, when determining to retransmit the ESG, a logical ESG aggregator proceeds to step 1125 to deliver ESG metadata and an address of the associated terminal to an interactive server. In step 1130, the interactive server provides the associated terminal with the information.

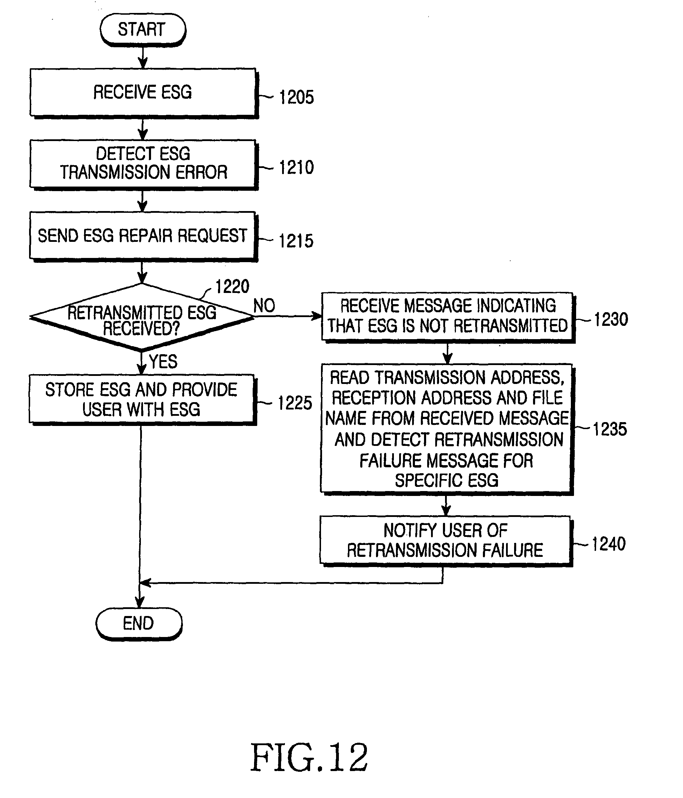

FIG. 12 is a flow chart illustrating a message flow of a receiver in accordance with the present invention.

Referring to FIG. 12, the receiver receives an ESG in step 1205 and detects a transmission error in step 1210. An ESG repair request is transmitted to a network in step 1215. If a retransmitted ESG is received in step 1220, the ESG is stored and is provided to a terminal in step 1225. However, if it is determined that a retransmitted ESG is not received in step 1220, the receiver proceeds to step 1230 to determine that an ESG repair response message indicating that the ESG is not retransmitted is received. The receiver detects a retransmission failure message for a specific ESG by reading a transmission address, a reception address and a file name from the received message in step 1235 and then notifies the user with the retransmission failure message in step 1240.

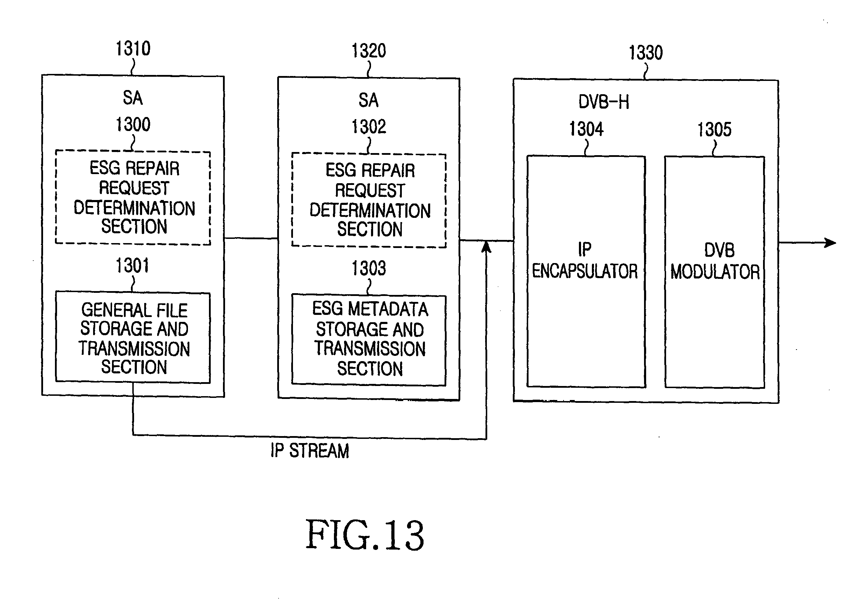

FIG 13 is a block diagram illustrating a structure of a transmitter in accordance with the present invention.

Referring to FIG. 13, an SA entity 1310 and an SM entity 1320 on a network are provided with a file storage and transmission section 1301 and an ESG metadata storage and transmission section 1303, respectively. The SA entity 1310 and the SM entity 1320 are responsible for transmitting a general file and an ESG, respectively. An ESG repair request determination section 1300 or 1302 is provided in the SA or SM entity 1310 or 1320. However, in the first and second exemplary embodiments, the repair request determination section 1300 is provided in the SA entity 1310. In the third exemplary embodiment, the determination section 1302 is provided in the SM entity 1320.

The general file is delivered to an IP encapsulator 1304 of a DVB-H entity 1330 without passing through the SM entity 1320. The IP encapsulator 1304 encapsulates an input IP stream into a Moving Picture Experts Group-2 (MPEG2) Transport Stream (TS). The MPEG2 TS is multiplexed together with another MPEG2 TS corresponding to a Television (TV) stream. A DVB modulator 1305 modulates the multiplexed TS into an Orthogonal Frequency Division Multiplexing (OFDM) symbol. The OFDM symbol is transmitted via an antenna.

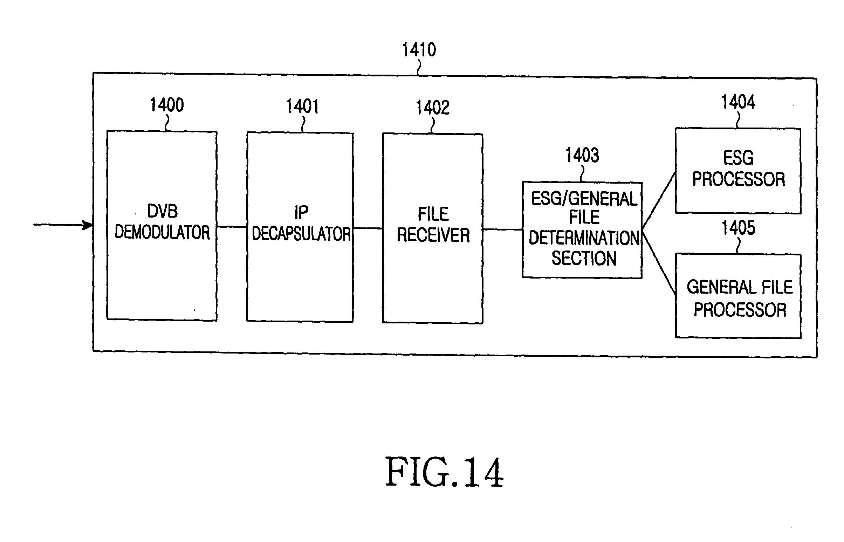

FIG. 14 is a block diagram illustrating a structure of a receiver in accordance with the present invention.

Referring to FIG. 14, a DVB receiver 1410 receives a signal via an antenna. A DVB demodulator 1400 performs an OFDM demodulation process for the received signal. A demultiplexer separates demodulated data into an encapsulated IP packet and an MPEG2 TS packet. A data processor performs a series of processes for the TS packet to enable a user to view an associated service. An IP decapsulator 1401 demodulates the encapsulated IP packet into an IP stream. The IP stream is output to a file receiver 1402. A determination section 1403 determines whether the IP stream is a general file or an ESG If the IP stream is the ESG, an ESG processor 1404 receives and stores the ESG. If the IP stream is the general file, a general file processor 1405 receives and stores the general file.

As is apparent from the above description, the present invention can implement a procedure in which a terminal transmits a repair request when an ESG transmission error occurs in receiving an ESG and receives a retransmitted ESG. The ESG in which error has occurred can then be retransmitted and received by the terminal.

Although the exemplary embodiments of the present invention have been disclosed for illustrative purposes, those skilled in the art will appreciate that various modifications, additions, and substitutions are possible, without departing from the scope of the present invention. Therefore, the present invention is not limited to the above-described embodiments, but is defined by the following claims, along with their full scope of equivalents.

## Claims

1. A method for handling an Electronic Service Guide (ESG) transmission error in a digital video broadcasting system, comprising the steps of:

   receiving, by a service application entity, a file repair request message from a terminal after broadcasting an ESG from a service management entity to the terminal;
   transmitting the file repair request message and an address of the terminal that's transmitted from the file repair request message from the service application entity to the service management entity when the file repair request message is a request for the ESG;

interpreting the file repair request message in a logical ESG aggregator for generating the ESG within the service management entity and determining whether to retransmit the ESG to the terminal;
delivering ESG metadata and the address of the terminal from the logical ESG aggregator to an interactive server for transmitting the ESG within the service management entity, when determining to retransmit the ESG; and
transmitting the ESG metadata from the interactive server to the terminal.

2. The method of claim 1, further comprising:

determining, by the service application entity using a file address comprised in the request message, whether the file repair request message is a request for the ESG or a general file.

3. The method of claim 1, wherein the file repair request message comprises a Hyper Text Transfer Protocol (HTTP) message used when making a file repair request for a general file.

4. The method of claim 1, further comprising:

delivering determination information from the logical ESG aggregator to the service application entity when determining not to retransmit the ESG to the terminal; and
generating a response message containing the determination information; and
transmitting the generated response message from the service application entity to the terminal.

5. The method of claim 4, further comprising:

determining, by the terminal, whether an ESG retransmission has failed using a transmission address contained in the response message.

6. A method for handling an Electronic Service Guide (ESG) transmission error in a digital video broadcasting system, comprising the steps of:

receiving, by a service application entity, a file repair request message from a terminal after broadcasting an ESG from a service management entity to the terminal;
transmitting the file repair request message and an address of the terminal the file repair request message from the service application entity to the service management entity when the file repair request message is a request for the ESG;
interpreting the file repair request message in a logical ESG aggregator for generating the ESG within the service management entity and determining whether to retransmit the ESG to the terminal;
delivering ESG metadata and the address of the terminal from the logical ESG aggregator to the service application entity when determining to retransmit the ESG; and
transmitting the ESG metadata from the service application entity to the terminal.

7. The method of claim 6, further comprising:

determining, by the service application entity, whether the file repair request message is a request for the ESG or a general file, using a file address contained in the request message.

8. The method of claim 6, wherein the file repair request message comprises a Hyper Text Transfer Protocol (HTTP) message used when making a file repair request for a general file.

9. The method of claim 6, further comprising:

delivering determination information from the logical ESG aggregator to the service application entity when determining not to retransmit the ESG; and
generating a response message contains the determination information; and
transmitting the generated response message from the service application entity to the terminal.

10. The method of claim 9, further comprising:

determining, by the terminal, whether an ESG retransmission has failed using a network address and a file name contained in the response message.

**11.** A method for handling an Electronic Service Guide (ESG) transmission error in a digital video broadcasting system, comprising the steps of:

receiving, by a service management entity, a file repair request message from a terminal after broadcasting an ESG from the service management entity to the terminal;

determining whether to retransmit the ESG in an interactive server for transmitting the ESG from the service management entity using an ESG repair request message;

transmitting an ESG retransmission request message from the interactive server to a logical ESG aggregator for generating the ESG within the service management entity when determining to retransmit the ESG;

transmitting ESG metadata and an address of the terminal from the logical ESG aggregator to the interactive server; and

transmitting the ESG metadata from the interactive server to the terminal.

**12.** The method of claim 11, wherein the terminal detects an ESG transmission error and transmits the file repair request message.

**13.** The method of claim 11, wherein the file repair request message comprises a Hyper Text Transfer Protocol (HTTP) message.

**14.** The method of claim 11, further comprising the steps of:

generating a response message containing determination information when determining not to retransmit the ESG and transmitting the generated response message from the logical ESG aggregator to the terminal.

**15.** The method of claim 14, wherein the terminal determines whether an ESG retransmission has failed using a transmission address, a reception address, and a file name contained in the response message.

**16.** An apparatus for handling an Electronic Service Guide (ESG) transmission error in a digital video broadcasting system, comprising:

a service application entity for receiving a file repair request message from a terminal and determining whether to retransmit an ESG; and

a service management entity for generating the ESG, broadcasting the generated ESG to the terminal, receiving the file repair request message from the service application entity, determining whether to retransmit the ESG, and transmitting ESG metadata to the terminal based upon the results of the determination,

wherein the service application entity provides the service management entity with the file repair request message and an address of the terminal when the file repair request message is a request for the ESG, and

the service management entity interprets the file repair request message, determines whether to retransmit the ESG to the terminal and transmits the ESG metadata to the terminal based upon the results of the determination.

**17.** The apparatus of claim 16, wherein the service management entity comprises:

a logical ESG aggregator for generating the ESG, receiving the request message from the service application entity, and determining whether to retransmit the ESG; and

an interactive server for transmitting the generated ESG to the terminal, receiving the ESG metadata from the logical ESG aggregator, and transmitting the received ESG metadata to the terminal.

**18.** The apparatus of claim 16, wherein the service application entity determines whether the file repair request message is a request for the ESG or a general file, using a file address contained in the file repair request message.

**19.** The apparatus of claim 16, wherein the file repair request message is a Hyper Text Transfer Protocol (HTTP) message used when making a file repair request for a general file.

**20.** The apparatus of claim 17, wherein:

the logical ESG aggregator delivers determination information to the service application entity when determining not to retransmit the ESG; and the service application entity generates a response message containing the determination information and transmits the generated response message to the terminal.

21. The apparatus of claim 20, wherein the terminal determines whether an ESG retransmission has failed using a transmission address contained in the response message.

22. An apparatus for handling an Electronic Service Guide (ESG) transmission error in a digital video broadcasting system, comprising:

   a service application entity for receiving a file repair request message from a terminal and determining whether to retransmit an ESG; and
   a service management entity for generating the ESG, broadcasting the generated ESG to the terminal, receiving the request message from the service application entity, determining whether to retransmit the ESQ and transmitting ESG metadata to the terminal via the service application entity based upon results of a determination,

   wherein the service application entity provides the service management entity with the request message and an address of the terminal from which the request message has been sent when the file repair request message is a request for the ESG, and
   the service management entity interprets the request message and determines whether to retransmit the ESG to the terminal.

23. The apparatus of claim 22, wherein the service management entity comprises:

   a logical ESG aggregator for generating the ESG, receiving the request message from the service application entity, determining whether to retransmit the ESG, and transmitting the ESG metadata to the service application entity when determining to retransmit the ESG; and
   an interactive server for transmitting the generated ESG to the terminal.

24. The apparatus of claim 22, wherein the service application entity determines whether the file repair request message is a request for the ESG or a general file, using a file address contained in the request message.

25. The apparatus of claim 22, wherein the file repair request message comprises a Hyper Text Transfer Protocol (HTTP) message used when making a file repair request for a general file.

26. The apparatus of claim 23, wherein:

   the logical ESG aggregator delivers determination information to the service application entity when determining not to retransmit the ESG; and
   the service application entity generates a response message containing the determination information and transmits the generated response message to the terminal.

27. The apparatus of claim 26, wherein the terminal determines whether an ESG retransmission has failed using a network address and a file name contained in the response message.

28. An apparatus for handling an Electronic Service Guide (ESG) transmission error in a digital video broadcasting system, comprising:

   an interactive server for broadcasting an ESG to a terminal, receiving an ESG repair request message from the terminal, interpreting the request message, and determining whether to retransmit the ESG to the terminal which transmitted the request message; and
   a logical ESG aggregator for generating the ESG, receiving an ESG retransmission request based upon results of a determination of the interactive server and transmitting ESG metadata to the interactive server, the interactive server transmitting the ESG metadata received from the logical ESG aggregator to the terminal.

29. The apparatus of claim 28, wherein the interactive server and the logical ESG aggregator are provided in a service management entity.

**30.** The apparatus of claim 28, wherein the terminal detects an ESG transmission error and transmits the request message.

**31.** The apparatus of claim 28, wherein the file repair request message comprises a Hyper Text Transfer Protocol (HTTP) message.

**32.** The apparatus of claim 28, wherein the logical ESG aggregator generates a response message containing determination information when determining not to retransmit the ESG and transmits the generated response message to the terminal.

**33.** The apparatus of claim 32, wherein the terminal determines whether an ESG retransmission has failed using a transmission address, a reception address and a file name comprised in the response message.

FIG.1

FIG.2

FIG.3

- Content Consumption 382
- 380
- DVB-H receiver
- CBMS-1
- X-2
- 360
- Phy. ESG agger.
- IP-to -Sect.
- CBMS-3
- CBMS-6
- X-5
- CBMS-4
- CBMS-2
- SERVICE MANAGEMENT
- CBMS-7
- 340
- CBMS-5
- File Delivery 322
- File source 324
- Sce Appl. Config 326
- 320
- X-1
- Content Creation
- 300
- → Activated for ESG
- → Not involved for ESG

FIG.4

terminal (440) — service & content description handler (445)

(435) — Interactive network

Service Management (420) — interactive server (430) — logical ESG aggregator (425)

Service Application (410) — File Delivery (415)

HTTP file repair request (400)

ESG metadata (405)

RESPONSE MESSAGE (408)

INTERPRET ESG RETRANSMISSION REQUEST ~403

ESG metadata (404)

CHECK ESG RETRANSMISSION REQUEST ~401

HTTP file repair request (402)

NOTIFICATION INDICATING THAT ESG IS NOT RETRANSMITTED (406)

GENERATE RESPONSE MESSAGE INDICATING THAT FILE IS NOT RETRANSMITTED ~407

EP 1 791 362 A2

Service Application (510)

| File Delivery (515) |

Service Management (520)

| logical ESG aggregator (525) | interactive server (530) |

(535)

| Interactive network |

terminal (540)

| service & content description handler (545) |

HTTP file repair request (500)

| CHECK ESG RETRANSMISSION REQUEST | ~501

HTTP file repair request (502)

| INTERPRET ESG RETRANSMISSION REQUEST | ~503

ESG metadata (504)

ESG metadata (505)

| NOTIFICATION INDICATING THAT ESG IS NOT RETRANSMITTED (506) |

| GENERATE RESPONSE MESSAGE INDICATING THAT FILE IS NOT RETRANSMITTED | ~507

RESPONSE MESSAGE (508)

# FIG.5

EP 1 791 362 A2

Service Application (610)

Service Management (620)

(635)

terminal (640)

| File Delivery (615) | logical ESG aggregator (625) | interactive server (630) | Interactive network | service & content description handler (645) |

HTTP repair request (600)

INTERPRET ESG RETRANSMISSION REQUEST ~601

ESG REQUEST (602)

ESG metadata (603)

ESG metadata (604)

GENERATE RESPONSE MESSAGE INDICATING THAT FILE IS NOT RETRANSMITTED ~605

RESPONSE MESSAGE (606)

# FIG.6

START

SM: SEND ESG — 705

SA: RECEIVE HTTP FILE REPAIR REQUEST — 710

SA: GENERAL FILE OR ESG? — 715

GENERAL FILE → PROCESS GENERAL FILE — 720

ESG

SA: SEND REPAIR REQUEST MESSAGE AND TERMINAL ADDRESS TO SM — 725

SM: INTERPRET MESSAGE FROM SA IN LOGICAL ESG AGGREGATOR — 730

SM: ESG RETRANSMISSION? — 735

NO → SM: GENERATE MESSAGE INDICATING THAT ESG IS NOT RETRANSMITTED AND SEND MESSAGE TO SA — 740

YES

SM: SEND ESG METADATA AND TERMINAL ADDRESS TO INTERACTIVE SERVER — 750

SA: GENERATE FILE REPAIR RESPONSE MESSAGE AND SEND MESSAGE TO TERMINAL — 745

SM: SEND ESG METADATA TO TERMINAL — 755

END

FIG.7

START

RECEIVE ESG — 805

DETECT ESG
TRANSMISSION ERROR — 810

SEND HTTP FILE
REPAIR REQUEST — 815

820
RETRANSMITTED ESG
RECEIVED?

NO → RECEIVE FILE REPAIR
RESPONSE MESSAGE
INDICATING THAT ESG IS
NOT RETRANSMITTED — 830

YES

STORE ESG AND PROVIDE
USER WITH ESG — 825

READ FILE NAME FROM
RECEIVED MESSAGE AND
DETECT RETRANSMISSION FAILURE
MESSAGE FOR SPECIFIC ESG — 835

NOTIFY USER OF
RETRANSMISSION FAILURE — 840

END

# FIG.8

FIG.9

FIG.10

START

SM: SEND ESG — 1105

RECEIVE HTTP ESG
REPAIR REQUEST — 1110

1115
SM: ESG
RETRANSMISSION? — NO → SM: GENERATE MESSAGE
INDICATING THAT ESG IS
NOT RETRANSMITTED
AND SEND MESSAGE TO SA — 1120

↓ YES

SM: SEND ESG METADATA
AND TERMINAL ADDRESS TO
INTERACTIVE SERVER — 1125

SM: SEND ESG METADATA
TO TERMINAL — 1130

END

# FIG.11

FIG.12

1310

SA

1300

ESG REPAIR
REQUEST
DETERMINATION
SECTION

1301

GENERAL FILE
STORAGE AND
TRANSMISSION
SECTION

1320

SA

1302

ESG REPAIR
REQUEST
DETERMINATION
SECTION

1303

ESG METADATA
STORAGE AND
TRANSMISSION
SECTION

1330

DVB-H

1304

IP
ENCAPSULATOR

1305

DVB
MODULATOR

IP STREAM

FIG.13

FIG.14